# EUROPÄISCHE PATENTANMELDUNG

(11) **EP 0 556 696 A1**
(43) Veröffentlichungstag der Anmeldung: **25.08.1993**
(21) Anmeldenummer: 93102001.0
(22) Anmeldetag: 09.02.1993
(51) Int. Cl.: A01G 9/12

(54) **Verfahren und Vorrichtung zur Aufzucht und Haltung von Pflanzen mit geringem oder fehlendem Eigenstehvermögen**

(30) Priorität: 21.02.1992 DE 4205368; 11.05.1992 DE 4215401
(71) Anmelder: Kirchner, Paul, D-80995 München (DE)
(72) Erfinder: Kirchner, Paul, D-80995 München (DE)
(74) Vertreter: Diehl, Hermann O. Th., Dr.

(57) **Zusammenfassung**

Ein Verfahren und eine Vorrichtung zur Aufzucht und Haltung von Pflanzen mit geringem oder fehlendem Eigenstehvermögen führen die Triebe (7) der zumindest einen Pflanze (6,7) im Inneren eines rohrartigen Hohlkörpers (1) entlang, wobei die Triebe mit zunehmendem Wachstum über den rohrartigen Hohlkörper (1) seitlich durchsetzende Öffnungen (10) und eine obere Endöffnung (12) herausgeführt sind und die Wurzeln durch die seitlichen Öffnungen (10) in das Substrat (3) hineinwachsen.

## Beschreibung

Die Erfindung betrifft ein Verfahren zur Aufzucht und Haltung von Pflanzen mit geringem oder fehlendem Eigenstehvermögen und eine Vorrichtung zur Durchführung desselben.

Pflanzen mit geringem oder fehlendem Eigenstehvermögen, wie die sog. Bodendecker, sind nicht in der Lage, ohne externe Stütze in die Höhe zu wachsen. Bei der Haltung und Aufzucht derartiger Pflanzen, wie z.B. von Fuchsien, war man daher gezwungen, die neugewachsenen Triebe an einem spalierartigen Gerüst festzubinden, wenn die Pflanze in die Höhe geführt werden sollte. Dieses zeitaufwendige und Geschick erfordernde Vorgehen ist im kommerziellen Pflanzenbau, insbesondere bei der Produktion von Topfpflanzen, aus Kostengründen nicht tragbar.

Die FR-A-2587586 zeigt eine Abwandlung dieses Verfahrens, von der die vorliegende Erfindung ausgeht. Hier kommt ein spalierartiges Gerüst zur Anwendung, das auf dem Boden mit seiner Unterseite aufsteht und die Triebe der in den Boden gesetzten Pflanze rohrartig umgibt, wobei ein seitlich außen an dem Gerüst befestigter Stab, der mit einem abgespitzten Ende in das Erdreich eingesteckt wird, die Halterung des Spaliers und der Pflanze gewährleisten soll. Letzteres gelingt jedoch in der Praxis nicht mit ausreichender Sicherheit, da bei der größer gewordenen Pflanze durch das Gewicht der dem Licht zugewandten Triebe und Früchte einseitige Kräfte an dem Gerüst wirken, welche die Verankerung desselben nicht mehr ausgleichen kann. Dies gilt insbesondere dann, wenn zusätzlich Windkräfte angreifen. Die vorstehend beschriebene Vorrichtung hat daher in der Praxis bei den Gärtnereien keinen Eingang gefunden. Es war daher bis heute nötig, derartige Pflanzen mit geringem oder fehlendem Eigenstehvermögen lediglich als Bodendecker einzusetzen oder sie in hochgehängte Gefäße, wie z.B. sog. Ampeln, zu pflanzen, von denen sie mit zunehmendem Wachstum herunterhängen konnten.

Die DE-A1-37 30 666 beschreibt eine weitere bekannte Vorrichtung, um schwache Pflanzen, d.h. Pflanzen ohne Eigenstehvermögen, als Topfpflanzen nutzbar zu machen. Hier wird eine Pflanze am oberen Ende eines Rohres gepflanzt, das vertikal in das Substrat des Blumentopfes eingesteckt ist, so daß sich die Pflanze ebenfalls als hängende Pflanze darstellt. Das Rohr weist über seine gesamte Länge eine geschlossene Wandung auf und geht an seinem unteren Ende in sich nach unten in Kreuzform zu einer Spitze verjüngende Plattenteile über, zwischen denen ein freies Hindurchwachsen der Pflanzenwurzeln möglich ist.

Der vorliegenden Erfindung liegt daher die Aufgabe zugrunde, ein Verfahren und eine Vorrichtung zu schaffen, welche es ermöglichen, Pflanzen mit geringem oder fehlendem Eigenstehvermögen kostengünstig und mit geringem Arbeitsaufwand während der Aufzuchtperiode in die Höhe zu führen und die Pflanze in diesem Zustand auch über lange Perioden zu halten.

Diese Aufgabe wird erfindungsgemäß bei einem Verfahren zur Aufzucht und Haltung von Pflanzen mit geringem oder fehlendem Eigenstehvermögen, bei dem die Triebe der zumindest einen Pflanze im Inneren eines rohrartigen, im Substrat gehalterten Hohlkörpers geführt und mit zunehmendem Wachstum über den rohrartigen Hohlkörper seitlich durchsetzende Öffnungen herausgeführt werden, dadurch gelöst, daß als Hohlkörper ein Rohr verwendet wird, das im wesentlichen über seine gesamte Länge durchgehend mit seitlichen Öffnungen versehen ist, daß die Pflanze mit ihrem Wurzelballen in den Hohlkörper eingesetzt wird, und daß der Hohlkörper mit im wesentlichen senkrecht verlaufender Längsachse mittels eines über das untere Ende des Wurzelballens vorstehenden freien Endbereichs in das Substrat eingesteckt wird, wobei der Wurzelballen in dem Bereich des Hohlkörpers eingesetzt wurde, der im eingesteckten Zustand in etwa mit der Substratoberfläche fluchtet.

Die Erfindung betrifft des weiteren eine Vorrichtung zur Durchführung des erfindungsgemäßen Verfahrens gemäß Patentanspruch 12. Bevorzugte Weiterbildungen des erfindungsgemäßen Verfahrens und der erfindungsgemäßen Vorrichtung ergeben sich aus den abhängigen Ansprüchen sowie der folgenden Beschreibung und den Zeichnungen.

Der Hohlkörper und dessen Wandung im Bereich der oberen Austrittsöffnung geben dabei der Pflanze den notwendigen Halt, wobei die seitlichen Öffnungen des Hohlkörpers, die einen möglichst hohen Anteil der Seitenfläche einnehmen sollen, jedoch nur soweit, daß der Hohlkörper noch eine ausreichende Eigensteifheit und Festigkeit aufweist, in dem über der Substratoberfläche liegenden Bereich auch dazu dienen, der Pflanze zumindest einen Teil des für das Wachstum notwendigen Lichts zuzuführen. In dem unter der Substratoberfläche liegenden Bereich ermöglichen sie den Austritt der Wurzeln in das den Hohlkörper umgebende Substrat und bewirken mit fortschreitendem Wachstum der Pflanze eine Durchwurzelung desselben, welche bewirkt, daß der Hohlkörper und die von ihm getragene Pflanze fest im Substrat verankert sind. Vorzugsweise werden die Endtriebe der Pflanze durch eine obere Endöffnung des rohrartigen Hohlkörpers aus diesem herausgeführt, so daß sie nach der Aufzuchtphase von dort seitlich und nach unten heraushängen können. Die durch die seitlichen Öffnungen und die obere Endöffnung ausgetretenen Triebe decken den Hohlkörper weitgehend oder vollständig ab, so daß dieser den optischen Eindruck der Pflanze nicht stört.

Als günstig hat es sich ferner erwiesen, wenn bei Verwendung von rein bodendeckenden Pflanzen der Hohlkörper mit seiner Längsachse im wesentlichen horizontal gelagert wird, bis Triebe an seiner Endöffnung austreten, wobei anschließend der Hohlkörper in eine Lage gebracht wird, in welcher seine Längsachse im wesentlichen vertikal verläuft.

Gemäß einer Ausführungsform des erfindungsgemäßen Verfahrens werden sämtliche Triebe der Pflanze zunächst im Inneren des Hohlkörpers geführt und mit zunehmendem Wachstum aus dem Hohlkörper durch die seitlichen Öffnungen und gegebenenfalls die Endöffnung herausgeführt. Zweckmäßigerweise wird dabei zumindest ein Teil der Triebe nach ihrem Austritt aus dem Hohlkörper an dessen Außenwand gehaltert. Gemäß einer alternativen Ausführungsform des Verfahrens wird zumindest ein Teil der Triebe der Pflanze an der Außenwand des Hohlkörpers gehaltert. Die an der Außenwand des Hohlkörpers gehaltenen Triebe werden mit Vorteil über vorzugsweise elastische Klammern befestigt, welche in die Öffnungen von außen einsetzbar sind. Zweckmäßigerweise werden dabei Klammern mit einem ringsegmentartigen Bereich zur Umschließung der Triebe verwendet, die mit zumindest einem abgewinkelten Endbereich versehen sind.

Als günstig haben sich dabei gamma- oder omegaförmig gebogene Klammern erwiesen, die vorzugsweise aus Kunststoff bestehen.

Um sicherzustellen, daß auch der Wurzelballen in seinem Wachstum nicht behindert ist und daß er jeweils ausreichend durchlüftet und befeuchtet wird, erfolgt die Verwendung eines Hohlkörpers, der im wesentlichen über seine gesamte Länge mit durchgehenden Öffnungen versehen ist. Als günstig hat es sich dabei erwiesen, wenn die Öffnungen in dem Bereich des Hohlkörpers, der im Substrat befestigt wird, rechteckförmig, und im Bereich des Hohlkörpers, der über das Substrat vorsteht, rund oder oval ausgebildet sind.

Um zu verhindern, daß alle oder zuviele Triebe bereits aus den ersten seitlichen Öffnungen herauswachsen, ist gemäß einer zweckmäßigen Variante des erfindungsgemäßen Verfahrens eine an der Wand des Hohlkörpers anliegende transparente Folie vorgesehen, welche ein verfrühtes Herauswachsen der Triebe durch die Öffnungen verhindert und mit zunehmendem Wachstum der Pflanze nach oben wegziehbar ist, wobei die Folie vorzugsweise an der Innenwand des Hohlkörpers anliegt und aus dem Hohlkörper über dessen Endöffnung herausziehbar ist.

Zur Lösung der erfindungsgemäßen Aufgabe, und insbesondere zur Durchführung des erfindungsgemäßen Verfahrens, eignet sich besonders eine Vorrichtung zur Aufzucht und Haltung von Pflanzen mit geringem oder fehlendem Eigenstehvermögen, bei welcher der Hohlkörper von einem insbesondere zylindrischen Rohr gebildet ist, das mit seitlichen Öffnungen versehen ist. Zweckmäßigerweise ist das Rohr aus mehreren Teilen zusammensetzbar.

Um den Pflanzvorgang zu erleichtern und zu beschleunigen, enthält das Rohr vorzugsweise auch Mittel, die ein einfaches Einbringen der Pflanze ermöglichen. Gemäß einer besonders zweckmäßigen Ausgestaltung ist hierzu das Rohr aus mehreren Teilen zusammensetzbar, wobei bevorzugt die Teile über die gesamte Länge des Hohlkörpers verlaufende Segmente, z.B. Halbschalen, sind. Besonders einfach gestaltet sich der Pflanzvorgang, d.h. die Einbringung des Wurzelballens, wenn der Hohlkörper über ein im wesentlichen in Richtung seiner Längsachse verlaufendes Scharnier aufklappbar ist.

Der Hohlkörper ist gemäß einer bevorzugten Ausführungsform, ausgehend von einem Endbereich, mit rechteckförmigen, und ausgehend vom entgegengesetzten Endbereich, mit runden oder ovalen Öffnungen bzw. Durchbrüchen versehen, wobei die rechteckförmigen Öffnungen soweit gehen, wie der Hohlkörper später in das Substrat eingebracht wird. Die Unterteilung der Öffnungen in zwei unterschiedlich konstruierte Arten vereinfacht des weiteren ein exaktes und schnelles Positionieren des Wurzelballens bei dessen Einbringen in den Hohlkörper. Als günstig hat es sich erwiesen, wenn von den rechteckförmigen Öffnungen die Kanten mit größerer Kantenlänge im wesentlichen in Längsrichtung des Hohlkörpers verlaufen und/oder wenn die runden oder ovalen Öffnungen in zumindest zwei Größen vorgesehen sind.

Zweckmäßigerweise nimmt der Teil des Hohlkörpers mit rechteckförmigen Öffnungen etwa 30% und der Teil des Hohlkörpers mit runden oder ovalen Öffnungen etwa 70% des Hohlkörpers ein. Günstig ist es ferner, wenn der größte freie Durchmesser der runden oder ovalen Öffnungen zwischen 5 und 30 mm, vorzugsweise zwischen 10 und 20 mm, liegt. Es erscheint für das Wachstum vorteilhaft, wenn die runden bzw. ovalen Öffnungen in zwei unterschiedlichen Größen vorgesehen sind, wobei der Durchmesser der kleineren Öffnungen so gewählt ist, daß diese in dem zwischen benachbarten großen Öffnungen verbleibenden Wandungsbereich derart hineinpassen, daß die zwischen den Öffnungen verbleibenden Wandungsteile noch eine stabile eigensteife Struktur bilden. Gemäß einer zusätzlichen Weiterbildung der Erfindung ist am im Gebrauch oberen Rand des Hohlkörpers ein vorzugsweise abgerundeter Wulstbereich angebracht, der die herausragenden Triebe unterstützt und verhindert, daß diese sich aufgrund des Eigengewichts dort abscheren.

Der Hohlkörper ist vorzugsweise als kreiszylindrisches Rohr ausgebildet. Für das Wachstum ist es besonders günstig, wenn der Hohlkörper aus einem lichtundurchlässigen Material, vorzugsweise Kunststoff, besteht.

Eine an der Wandung des Hohlkörpers anliegende transparente und gegenüber der Wand längsverschiebliche Folie ermöglicht es, durch einfaches Nachobenziehen sicherzustellen, daß zumindest der Terminaltrieb während der Wachstumsphase in dem Hohlkörper geführt ist. Die Folie liegt vorzugsweise an der Innenwand des Hohlkörpers an.

Wenn im mittleren Bereich des Hohlkörpers eine dessen Seitenwand durchsetzende Öffnung vorgesehen ist, deren Durchmesser etwa dem halben Durchmesser des Hohlkörpers entspricht, kann ein den Durchmesser des Hohlkörpers übersteigender Wurzelballen auch neben dem Hohlkörper ins Substrat gepflanzt werden, wobei die Triebe der Pflanze durch diese Öffnung in den Hohlkörper eingeführt werden können, so daß sie in dessen Innerem emporranken können, wobei einzelne Triebe aus den seitlichen Durchbrüchen und zumindest der Terminaltrieb aus der oberen Endöffnung austreten.

Gemäß einer Weiterbildung der Vorrichtung sind in die Öffnungen einbringbare Halterungsmittel für die Triebe vorgesehen, welche es ermöglichen, Triebe im Inneren des Hohlkörpers, insbesondere aber Triebe außen an dem Hohlkörper, einen Halt zu bieten, so daß Triebe auch außen an dem Hohlkörper spalierartig hochgeführt werden können.

Die Halterungsmittel sind vorzugsweise von außen in die Öffnungen einbringbar. Mit Vorteil enthalten die Halterungsmittel Bereiche, welche von der Außenwand des Hohlkörpers nach außen abstehen und dazu dienen, Triebe der Pflanze an der Außenseite des Hohlkörpers zu halten und dort hochranken zu lassen. Zweckmäßigerweise sind die Halterungsmittel lösbare Einsteckklammern.

Es ist ferner günstig, wenn die Halterungsmittel federnd nachgiebig sind, da sie sich auf diese Weise leichter einsetzen lassen und die Pflanze nicht verletzen. Vorzugsweise bestehen sie aus Kunststoff. Die Formgebung der Halterungsmittel ist mit Vorteil derart gewählt, daß die Halterungsmittel zumindest einen kreissegmentförmigen Teil zur Triebaufnahme und zumindest einen abgewinkelten Endbereich zum Eingriff in die Öffnungen aufweisen. Gemäß einer bevorzugten Ausgestaltung sind die Halterungsmittel gammaförmig oder omegaförmig verlaufende Halterungsklammern.

Die beiliegenden schematisierten Zeichnungen bevorzugter Ausführungsbeispiele dienen der weiteren Erläuterung der Erfindung.
- Fig. 1: zeigt im Vertikalschnitt die Aufzucht einer Pflanze mit geringem oder fehlendem Eigenstehvermögen gemäß einem ersten Ausführungsbeispiel der Erfindung.
- Fig. 2: zeigt im Vertikalschnitt die Aufzucht einer Pflanze mit geringem oder fehlendem Eigenstehvermögen gemäß einem weiteren Ausführungsbeispiel der Erfindung.
- Fig. 3: zeigt im Vertikalschnitt ein Ausführungsbeispiel für die Aufzucht reiner Bodendecker, wobei Fig. 3a eine erste Vegetationsphase und Fig. 3b die Endvegetationsphase darstellt.
- Fig. 4: zeigt in perspektivischer Darstellung als Ausführungsbeispiel für den Hohlkörper ein zylindrisches Rohr mit rechteckförmigen und kreisförmigen seitlichen Öffnungen.
- Fig. 5: zeigt in perspektivischer Darstellung als Ausführungsbeispiel für den Hohlkörper ein zylindrisches, in Längsrichtung aufklappbares Rohr, wobei aus Gründen der Vereinfachung die seitlichen Öffnungen nicht dargestellt sind.
- Fig. 6: zeigt in perspektivischer Darstellung als weiteres Ausführungsbeispiel für den Hohlkörper ein zylindrisches, in Längsrichtung aus zwei Stücken zusammensteckbares Rohr, wobei auch hier aus Gründen der vereinfachten Darstellung die seitlichen Öffnungen nicht dargestellt sind.
- Fig. 7: zeigt im Vertikalschnitt eine weitere Ausgestaltung der Erfindung, bei der Triebe von zumindest einer Pflanze auch an der Außenseite eines Hohlkörpers mittels in dessen Öffnungen eingesetzter Klammern gehalten werden.
- Fig. 8: zeigt zwei Klammern zur Verwendung in der in Fig. 7 gezeigten Ausführungsform der Erfindung, wobei Fig. 8a eine gammaförmig und Fig 8b eine omegaförmig ausgestaltete Klammer wiedergibt.

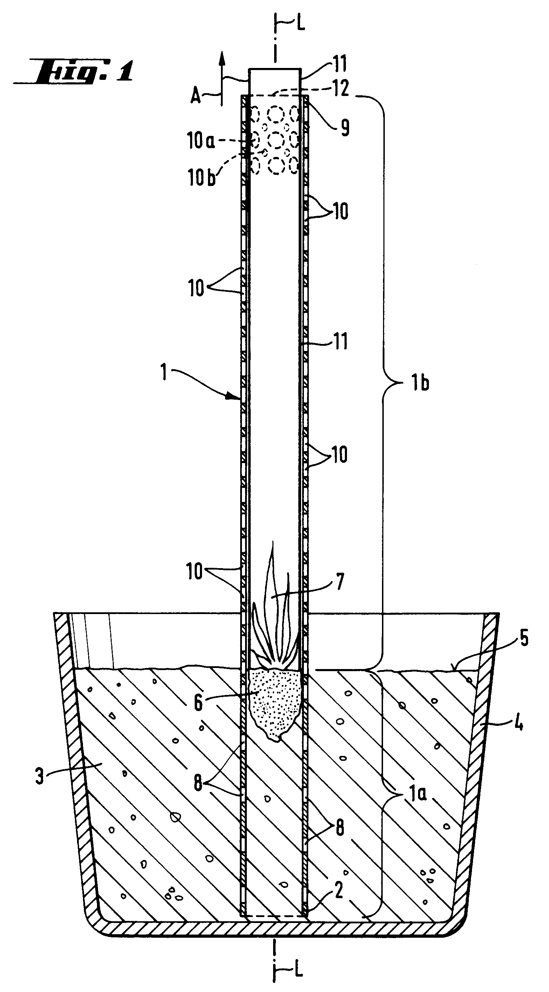

Bei dem in Fig. 1 gezeigten ersten Ausführungsbeispiel ist ein rohrartiger Hohlkörper 1, der vorzugsweise ein kreiszylindrisches, an beiden Enden offenes Rohr ist, mit seinem einen Endbereich 2 in ein Substrat 3 eingesteckt, das beispielsweise Blumenerde, Torf oder Blähton sein kann. Das Substrat 3 befindet sich in einem nur andeutungsweise gezeigten Behälter 4, z.B. einem Blumentopf. Der Endbereich 2 reicht bis etwa zu dem Boden des Behälters 4. Das Einstecken des Hohlkörpers 1 ist derart erfolgt, daß seine Längsmittelachse L-L im wesentlichen vertikal verläuft, d.h. senkrecht zur im wesentlichen horizontalen Substratoberfläche 5, wobei auch das Innere des Hohlkörpers 1 im Endbereich 2 das Substrat 3 enthält.

In dem Bereich des Hohlkörpers 1, der im eingesteckten Zustand in etwa mit der Substratoberfläche 5 fluchtet, ist der Wurzelballen 6 einer Pflanze 7 mit geringem oder fehlendem Eigenstehvermögen eingesetzt.

Der von der Oberseite des Wurzelballens 6 bis zum Endbereich 2 reichende Teil 1a des Hohlkörpers 1 ist mit die Seitenwandung durchsetzenden Öffnungen 8 versehen, welche dazu dienen, beim weiteren Wachstum der Pflanze 7 und des Wurzelballens 6 Wurzeln in das Substrat 3 austreten zu lassen und die im Inneren des Hohlkörpers belegenen Wurzeln mit Luft und Feuchtigkeit zu versorgen.

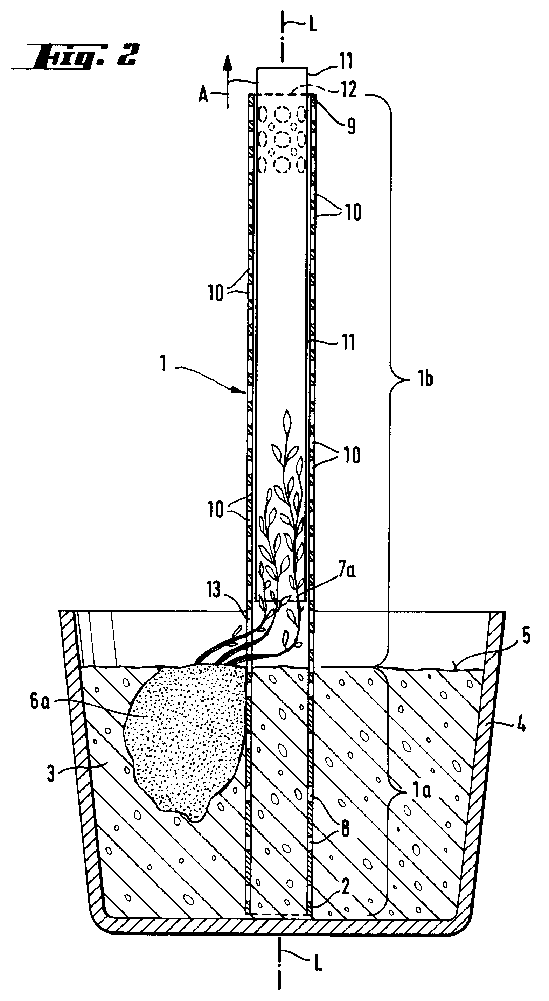

Der über die Substratoberfläche 5 nach oben vorstehende Bereich 1b des Hohlkörpers 1 weist bis zu dem oberen Endbereich 9 eine Vielzahl von die Seitenwand durchsetzenden Öffnungen 10 auf, welche dazu dienen, der Pflanze 7 Luft und Licht zuzuführen, auch wenn der Hohlkörper selbst lichtundurchlässig ist, und durch welche in einer späteren Wachstumsphase, wenn die Triebe der Pflanze im Inneren des Hohlkörpers 1 nach oben ranken, Seitentriebe nach außen durchtreten lassen. Zu Beginn der Wachstumsphase, die in Fig. 1 dargestellt ist, wird letzteres jedoch von einem Schlauch aus einer lichtdurchlässigen Folie 11 verhindert, der vorzugsweise die Innenwandung des Bereichs 1b des Hohlkörpers 1 abdeckt und an dieser anliegt, und der, wie durch den Pfeil A angedeutet, nach oben durch die obere Endöffnung 12 des Hohlkörpers herausziehbar ist. Dieses erfolgt vorzugsweise derart, daß zumindest der Terminaltrieb der Pflanze jeweils gehindert wird, durch einen der seitlichen Öffnungen 10 nach außen zu treten, so daß dieser aus der Endöffnung 12 herauswächst. Die Öffnungen 10 sind im oberen Endbereich 9 des Hohlkörpers gestrichelt angedeutet, da sie durch die Folie, zumindest andeutungsweise, zu sehen sind. Aus Gründen der vereinfachten Darstellung sind im Rest des Bereichs 1b diese Öffnungen nicht dargestellt, obwohl sie auch dort zu sehen wären. Gleiches gilt auch für die Darstellungen der Fig. 2, 3 und 7.

Die in Fig. 2 gezeigte zweite Ausführungsform der Erfindung entspricht weitgehend der von Fig. 1 und entsprechende Teile sind dort auch mit gleichen Bezugszeichen versehen.

Der Hohlkörper enthält jedoch zusätzlich eine oberhalb der Substratoberfläche 5 belegene größere Durchgangsöffnung 13, durch welche die Triebe einer Pflanze in das Innere des Hohlkörpers 1 eingeführt werden, wenn der Wurzelballen 6a der Pflanze 7a so groß ist, daß er im Inneren des Hohlkörpers 1 keinen Platz finden würde, und daher neben demselben in das Substrat 3 gepflanzt wird.

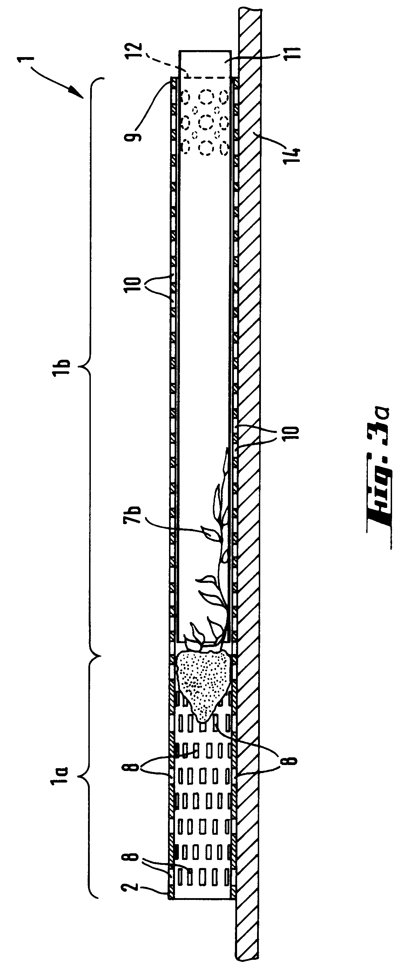

Fig. 3 zeigt ein drittes Ausführungsbeispiel der Erfindung, das speziell für reine Bodendecker geeignet ist, die bei vertikal stehendem Hohlkörper 1 nicht in der Lage wären, im Inneren des Hohlkörpers 1 nach oben zu ranken. Hierzu wird die Pflanze 7b, wie aus Fig. 3a ersichtlich, in dem Hohlkörper 1, wie im Falle des Beispiels von Fig. 1, angebracht, wobei der Hohlkörper beispielsweise auf einer ebenen Auflage 14 im wesentlichen horizontal oder nur leicht zu dem Endbereich 9 ansteigend gelagert wird, bis zumindest der Terminaltrieb der Pflanze aus der Öffnung 12 herausgewachsen ist. Dann wird der Hohlkörper mit der darin gewachsenen Pflanze aufgerichtet und, wie aus Fig. 3b ersichtlich, in das Substrat 3 eingesteckt.

Die Öffnungen 8 und 10 können gleich oder unterschiedlich ausgebildet sein, wobei im wesentlichen darauf zu achten ist, daß diese einen möglichst großen Bereich der Wandungsfläche des Hohlkörpers 1 einnehmen. Diesem Bestreben sind jedoch dort Grenzen gesetzt, wo eine weitere Vergrößerung der von den Durchbrüchen 8 und/oder 10 eingenommenen Fläche die strukturelle Festigkeit des Hohlkörpers zu stark herabsetzen würde, so daß es beispielsweise beim Einstecken von dessen unteren Endbereich 1a in das Substrat 3 zu einem Knicken oder Verformen kommen würde.

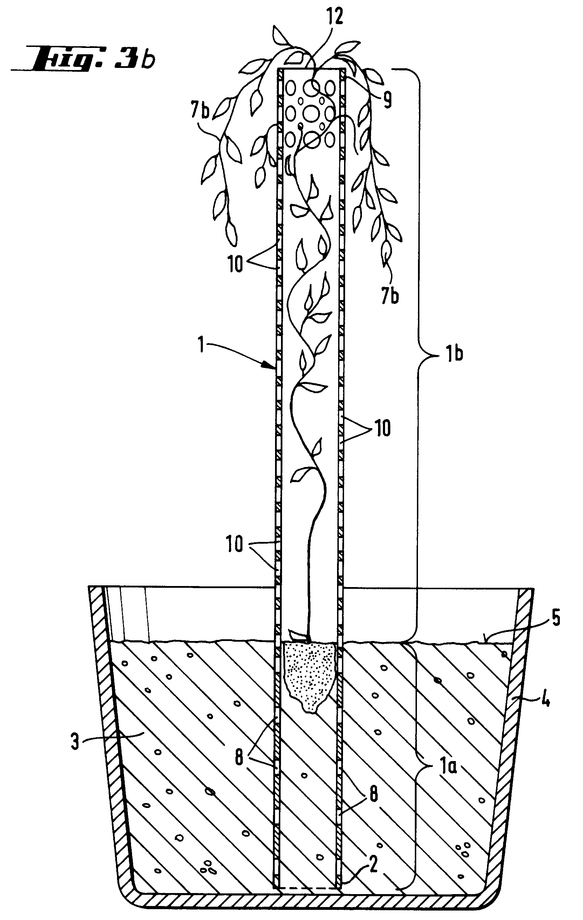

Fig. 4 zeigt eine bevorzugte Ausgestaltung der Öffnungen 8 und 10. Man erkennt, daß im unteren, in das Substrat 3 einzusteckenden Bereich 1a rechteckförmige Öffnungen 8 vorgesehen sind, wobei die längeren Kanten 15 der Öffnungen 8 in Richtung der Längsachse L-L des Hohlkörpers ausgerichtet sind. Diese Formgestaltung ist für das Wurzelwachstum von Pflanzen mit empfindlichen Wurzeln besonders geeignet. Im über die Substratoberfläche 5 vorstehenden Bereich 1b des Hohlkörpers sind kreisförmige Öffnungen 10 vorgesehen, wobei Öffnungen 10a mit großem Durchmesser den größeren Anteil der Oberfläche einnehmen und bevorzugt in dem zwischen diesen belegenen Bereichen zusätzliche kleinere Öffnungen 10b angebracht sind. Bei einem Hohlkörper 1 mit einem Durchmesser von beispielsweise 5 cm haben die größeren Öffnungen 10a vorzugsweise einen Durchmesser von 15 mm, die kleineren einen Durchmesser von 10 mm. Gemäß einer weiteren bevorzugten Ausgestaltung weist der Hohlkörper über seine gesamte Längserstreckung kreisförmige Öffnungen auf.

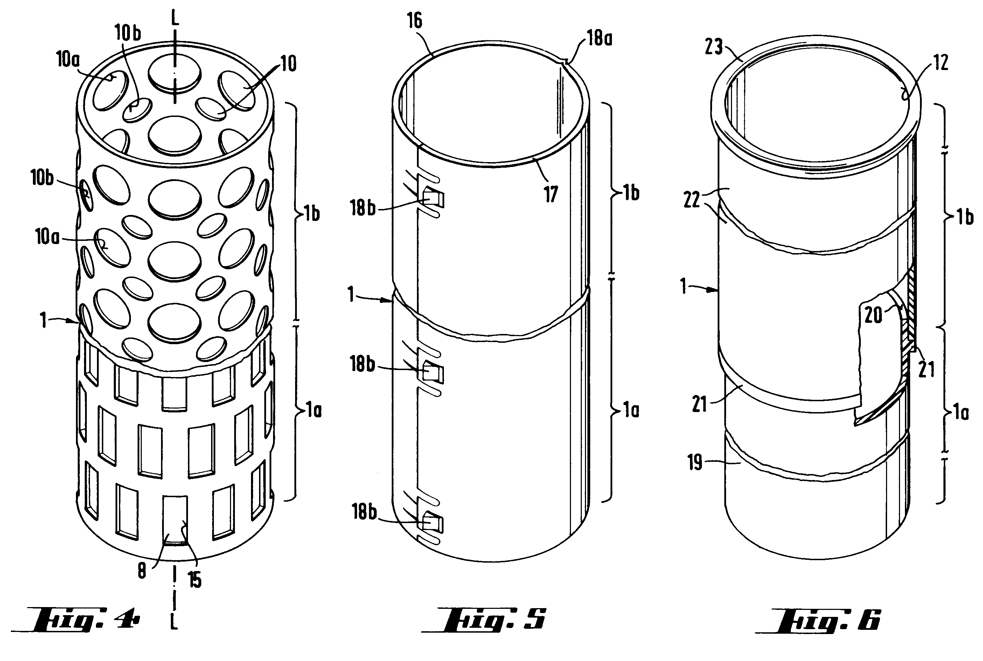

Um das Einbringen der Pflanzen und des Wurzelballens in den Hohlkörper 1 möglichst einfach zu gestalten, ist letzterer vorzugsweise aufklappbar, wie in Fig. 5 gezeigt, oder aus zwei Längsstücken zusammensetzbar, wie in Fig. 6 gezeigt, ausgebildet, wobei in beiden Fällen die Öffnungen 8 und 10 zur vereinfachten Darstellung weggelassen sind.

Der Hohlkörper 1 besteht bei der in Fig. 5 gezeigten Ausführungsform aus zwei Halbschalen 16 und 17, die über ein in Längsrichtung verlaufendes Scharnier 18a auseinanderklappbar sind, um die schlauchartige Folie 11 und die Pflanze 7 mit Wurzelballen 6 einzubringen. An den freien Enden der Halbschalen 16 und 17 angebrachte und miteinander in Eingriff bringbare Elemente 18b einer Schnappverbindung ermöglichen einen sicheren Verschluß des Hohlkörpers 1 nach dem vorbeschriebenen Füllvorgang.

Bei der in Fig. 6 gezeigten Ausführungsform besteht der untere Bereich 1a des Hohlkörpers 1 aus einem Rohrstück 19, das kurz vor seinem oberen Ende 20 mit einem nach außen vorstehenden Bund 21 versehen ist. Der Außendurchmesser des Rohrstücks 19 entspricht dem Innendurchmesser eines Rohrstücks 22, welches den oberen Bereich 1b des Hohlkörpers 1 bildet, so daß die Rohrstücke 19 und 22 zusammensteckbar sind, nachdem oben im Rohrstück 19 eine Pflanze mit Wurzelballen eingesetzt ist. Diese Konstruktion erlaubt es daneben auch, den Hohlkörper 1 durch Ineinanderstecken von mehr als zwei Rohrstücken beliebig zu verlängern; hierbei wird darauf geachtet, daß die Öffnungen der ineinandergesteckten Rohrstücke fluchten. Für diese Art der Anwendung ist es daher zweckmäßig, wenn Rohrstücke zur Verwendung kommen, die im oberen und unteren Bereich gleichgeformte und gleichartig angeordnete Öffnungen aufweisen.

Fig. 6 zeigt des weiteren einen am oberen Ende des Hohlkörpers 1 zur Verstärkung angebrachten Wulstbereich 23, der die Endöffnung 12 begrenzt und verhindert, daß Triebe, die aus der Endöffnung 12 heraushängen, an dem Rand des Hohlkörpers 1 abgeschert werden, der ohne den Wulstbereich nur eine Stärke hätte, welche der Materialdicke des Hohlkörpers entspricht.

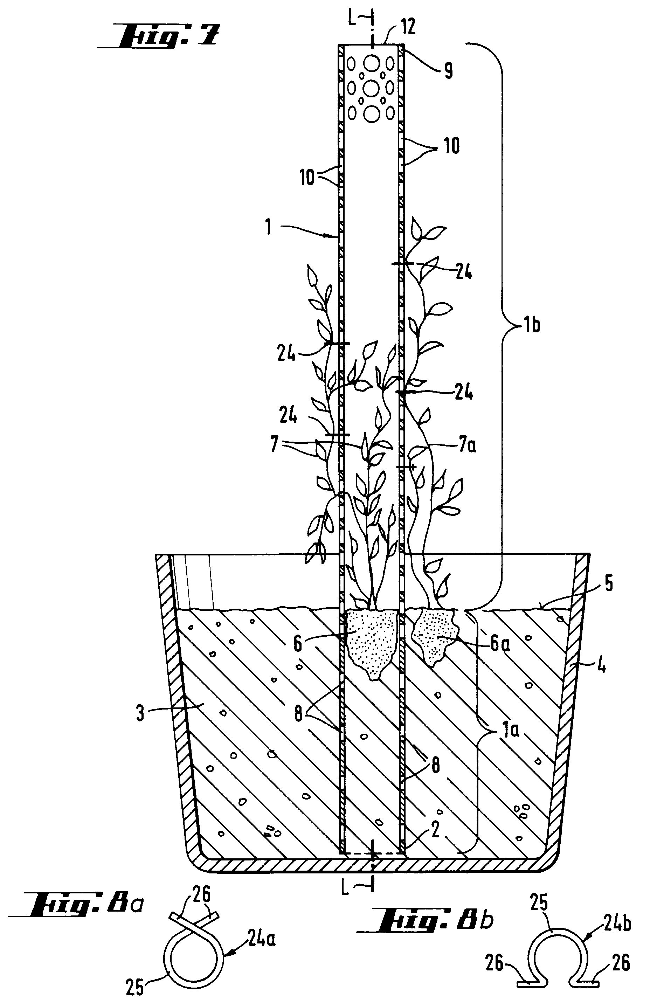

Fig. 7 zeigt eine zusätzliche Ausführungsvariante der Erfindung, bei welcher der aus Behälter 4, Substrat 3 und Hohlkörper 1 bestehende Grundaufbau demjenigen von Fig. 1 entspricht, wobei gleiche Teile mit gleichen Bezugszeichen versehen sind. Zur Vermeidung von Wiederholungen sind im folgenden lediglich die gegenüber Fig. 1 unterschiedlichen Merkmale ausführlich beschrieben. Im Inneren des Hohlkörpers 1 ist mit ihrem Wurzelballen 6 eine Pflanze 7 gepflanzt, deren Triebe im Inneren des Hohlkörpers 1 nach oben ranken.

Mangels der in Fig. 1 gezeigten Folie 11 wachsen jedoch einige Triebe, wie aus dem linken Teil von Fig. 7 ersichtlich, durch die Öffnungen 10 im unteren Bereich des Hohlkörpers 1 nach außen. Diese Triebe werden an der Außenseite des Hohlkörpers 1 spalierartig nach oben geführt, wobei die Triebe durch Halterungsklammern 24 festgehalten werden, welche lösbar in einzelne der Öffnungen 10 eingesetzt sind.

Die Halterungsklammern 24 sind biegsam und/oder elastisch und erlauben im Zusammenwirken mit den Öffnungen 10, auch Triebe von Pflanzen 7a, welche außerhalb des Hohlkörpers 1 gepflanzt sind, wie der Wurzelballen 6a zeigt, längs der Außenseite des Hohlkörpers 1 nach oben zu führen. Diese Triebe müssen im Gegensatz zur Darstellung der Fig. 2, wie im rechten Teil von Fig. 7 dargestellt, nicht in das Innere des Hohlkörpers 1 eingeführt werden, auch wenn in der Praxis einzelne Triebe von selbst nach Innen einwachsen werden. Der Hohlkörper 1 kann daher auch als reines Spaliergerüst dienen, an dem die Triebe von Pflanzen 7a mittels der Klammern 24 in einfacher Weise befestigbar sind, ohne daß, wie in Fig. 7 gezeigt, auch im Inneren des Hohlkörpers 1 eine Pflanze 7 hinaufrankt.

Fig. 8 zeigt zwei Ausführungsbeispiele von Klammern 24, die jeweils aus einem ringsegmentförmigen Teil 25 und zumindest einen abgebogenen Endbereich 26 bestehen. In Fig. 8a ist eine Klammer 24a mit gammaförmigem Verlauf und in Fig. 8b eine Klammer 24b mit omegaförmigem Verlauf dargestellt.

## Patentansprüche

1. Verfahren zur Aufzucht und Haltung von Pflanzen mit geringem oder fehlendem Eigenstehvermögen, bei dem die Triebe der zumindest einen Pflanze im Inneren eines rohrartigen, im Substrat gehalterten Hohlkörpers geführt und mit zunehmendem Wachstum über den rohrartigen Hohlkörper seitlich durchsetzende Öffnungen herausgeführt werden,
**dadurch gekennzeichnet,**
daß als Hohlkörper ein Rohr verwendet wird, das im wesentlichen über seine gesamte Länge durchgehend mit seitlichen Öffnungen versehen ist,
daß die Pflanze mit ihrem Wurzelballen in den Hohlkörper eingesetzt wird, und
daß der Hohlkörper mit im wesentlichen senkrecht verlaufender Längsachse mittels eines über das untere Ende des Wurzelballens vorstehenden freien Endbereichs in das Substrat eingesteckt wird, wobei der Wurzelballen in dem Bereich des Hohlkörpers eingesetzt wurde, der im eingesteckten Zustand in etwa mit der Substratoberfläche fluchtet.

2. Verfahren nach Anspruch 1, **dadurch gekennzeichnet,** daß der Hohlkörper in einem Behälter mit Substrat so weit eingesteckt wird, bis sein unterer Endbereich etwa bis zu dem Boden des Behälters hinabreicht.

3. Verfahren nach Anspruch 1 oder 2, **dadurch gekennzeichnet,** daß die Endtriebe der Pflanze durch eine obere Endöffnung des rohrartigen Hohlkörpers aus diesem herausgeführt werden.

4. Verfahren nach einem der vorstehenden Ansprüche, **dadurch gekennzeichnet**, daß bei Verwendung von bodendeckenden Pflanzen der Hohlkörper vor seinem Einstecken in das Substrat mit seiner Längsachse im wesentlichen horizontal gelagert wird, bis Triebe an seiner Endöffnung austreten.

5. Verfahren nach einem der vorstehenden Ansprüche, **dadurch gekennzeichnet,** daß sämtliche Triebe der Pflanze zunächst im Inneren des Hohlkörpers geführt und mit zunehmendem Wachstum aus dem Hohlkörper durch die seitlichen Öffnungen und gegebenenfalls die Endöffnung herausgeführt werden.

6. Verfahren nach Anspruch 5, **dadurch gekennzeichnet,** daß zumindest ein Teil der Triebe nach ihrem Austritt aus dem Hohlkörper an dessen Außenwand gehaltert wird.

7. Verfahren nach Anspruch 6, **dadurch gekennzeichnet,** daß die an der Außenwand des Hohlkörpers gehaltenen Triebe mit vorzugsweise elastischen Klammern befestigt werden, welche in die Öffnungen von außen einsetzbar sind.

8. Verfahren nach Anspruch 7, **dadurch gekennzeichnet,** daß Klammern mit einem ringsegmentartigen Bereich zur Umschließung der Triebe mit zumindest einem abgewinkelten Endbereich verwendet werden.

9. Verfahren nach Anspruch 7 oder 8, **dadurch gekennzeichnet,** daß gamma- oder omegaförmig gebogene Klammern verwendet werden, die vorzugsweise aus Kunststoff bestehen.

10. Verfahren nach einem der vorstehenden Ansprüche, **dadurch gekennzeichnet,** daß die Öffnungen in dem Bereich des Hohlkörpers, der sich im Substrat befindet, rechteckförmig, und im Bereich des Hohlkörpers, der über das Substrat vorsteht, rund oder oval ausgebildet sind.

11. Verfahren nach einem der vorstehenden Ansprüche, **dadurch gekennzeichnet,** daß eine an der Wand des Hohlkörpers anliegende transparente Folie vorgesehen ist, welche ein verfrühtes Herauswachsen der Triebe durch die Öffnungen verhindert und mit zunehmendem Wachstum der Pflanze nach oben wegziehbar ist, wobei die Folie vorzugsweise an der Innenwand des Hohlkörpers anliegt und aus dem Hohlkörper über dessen Endöffnung herausziehbar ist.

12. Vorrichtung zur Aufzucht und Haltung von Pflanzen mit geringem oder fehlendem Eigenstehvermögen zur Durchführung des Verfahrens nach einem der vorstehenden Ansprüche,
**gekennzeichnet durch**
einen Hohlkörper (1), der von einem insbesondere zylindrischen Rohr gebildet ist, das mit seitlichen Öffnungen (8,10) versehen ist.

13. Vorrichtung nach Anspruch 12, **dadurch gekennzeichnet,** daß das Rohr aus mehreren Teilen (16,17;19,22) zusammensetzbar ist.

14. Vorrichtung nach Anspruch 13, **dadurch gekennzeichnet,** daß die Teile über die gesamte Länge des Hohlkörpers verlaufende Segmente, z.B. Halbschalen (16,17), sind.

15. Vorrichtung nach einem der Ansprüche 12 bis 14, **dadurch gekennzeichnet,** daß der Hohlkörper über ein im wesentlichen in Richtung seiner Längsachse verlaufendes Scharnier (18a) aufklappbar ist.

16. Vorrichtung nach einem der Ansprüche 12 bis 15, **dadurch gekennzeichnet,** daß der Hohlkörper, ausgehend von einem Endbereich (2), mit rechteckförmigen (8), und ausgehend vom entgegengesetzten Endbereich (9), mit runden oder ovalen Öffnungen (10) versehen ist.

17. Vorrichtung nach Anspruch 16**, dadurch gekennzeichnet**, daß von den rechteckförmigen Öffnungen (8) die Kanten (15) mit größerer Kantenlänge im wesentlichen in Längsrichtung (L-L) des Hohlkörpers (1) verlaufen und/oder daß die runden oder ovalen Öffnungen (10) in zumindest zwei Größen (10a,10b) vorgesehen sind.

18. Vorrichtung nach Anspruch 17, **dadurch gekennzeichnet,** daß der Teil des Hohlkörpers mit rechteckigen Öffnungen (8) etwa 30% und der Teil des Hohlkörpers mit runden oder ovalen Öffnungen (10) etwa 70% des Hohlkörpers ausmachen, und/oder daß der größte freie Durchmesser der runden oder ovalen Öffnungen (10) zwischen 5 und 30 mm, insbesondere zwischen 10 und 20 mm, liegt.

19. Vorrichtung nach einem der Ansprüche 12 bis 18, **dadurch gekennzeichnet,** daß am im Gebrauch oberen Rand des Hohlkörpers (1) ein Wulstbereich (23) angebracht ist, der die herausragenden Triebe unterstützt.

20. Vorrichtung nach einem der Ansprüche 12 bis 19, **dadurch gekennzeichnet,** daß der Hohlkörper (1) als kreiszylindrisches Rohr ausgebildet ist.

21. Vorrichtung nach einem der Ansprüche 12 bis 20, **dadurch gekennzeichnet,** daß der Hohlkörper (1) aus einem lichtdurchlässigen Material, insbesondere Kunststoff, besteht.

22. Vorrichtung nach einem der Ansprüche 12 bis 21, **dadurch gekennzeichnet,** daß eine an der Innenwandung des Hohlkörpers anliegende transparente und gegenüber der Innenwand längsverschiebliche Folie (11) vorgesehen ist.

23. Vorrichtung nach einem der Ansprüche 12 bis 22, **dadurch gekennzeichnet,** daß im mittleren Bereich des Hohlkörpers (1) eine dessen Seitenwand durchsetzende Öffnung (13) vorgesehen ist, deren Durchmesser etwa dem halben Durchmesser des Hohlkörpers (1) entspricht.

24. Vorrichtung nach einem der Ansprüche 12 bis 23, **dadurch gekennzeichnet,** daß in die Öffnungen (10) einbringbare Halterungsmittel (24) für die Triebe vorgesehen sind.

25. Vorrichtung nach Anspruch 24**, dadurch gekennzeichnet,** daß die Halterungsmittel (24) von außen in die Öffnungen (10) einbringbar sind und Bereiche (25) aufweisen, welche von der Außenwand des Hohlkörpers (1) nach außen abstehen und dazu dienen, Triebe der Pflanze an der Außenseite des Hohlkörpers (1) zu halten.

26. Vorrichtung nach Anspruch 24 oder 25, **dadurch gekennzeichnet,** daß die Halterungsmittel lösbare Einsteckklammern (24) sind.

27. Vorrichtung nach einem der Ansprüche 24 bis 26, **dadurch gekennzeichnet,** daß die Halterungsmittel federnd nachgiebig sind und insbesondere aus Kunststoff bestehen.

28. Vorrichtung nach einem der Ansprüche 24 bis 27, **dadurch gekennzeichnet,** daß die Halterungsmittel (24) zumindest einen kreissegmentförmigen Teil (25) zur Triebaufnahme und zumindest einen abgewinkelten Endbereich (26) aufweisen.

29. Vorrichtung nach Anspruch 27 oder 28, **dadurch gekennzeichnet,** daß die Halterungsmittel gammaförmig oder omegaförmig verlaufende Halterungsklammern (24a, 24b) sind.
